Europäisches Patentamt

European Patent Office

Office européen des brevets

(19)

(11) Veröffentlichungsnummer: **0 120 809**
**B1**

(12)

# EUROPÄISCHE PATENTSCHRIFT

(45) Veröffentlichungstag der Patentschrift:
27.08.86

(51) Int. Cl.⁴: **G 03 B 27/46**, G 03 B 27/62

(21) Anmeldenummer: 84810107.7

(22) Anmeldetag: 05.03.84

---

(54) Verfahren und Vorrichtung zur Herstellung von fotographischen Kopien ab scheibenförmigen Kopiervorlagen.

---

(30) Priorität: 10.03.83 CH 1285/83

(43) Veröffentlichungstag der Anmeldung:
03.10.84 Patentblatt 84/40

(45) Bekanntmachung des Hinweises auf die Patenterteilung:
27.08.86 Patentblatt 86/35

(84) Benannte Vertragsstaaten:
CH DE FR GB IT LI

(56) Entgegenhaltungen:
WO - A - 80/00379

RESEARCH DISCLOSURE, Nr. 174, Oktober 1978, Seite 33, Zusammenfassung Nr. 17433, Havant, GB "Article handling concepts"

(73) Patentinhaber: **GRETAG Aktiengesellschaft, Althardstrasse 70, CH-8105 Regensdorf (CH)**

(72) Erfinder: **Lüscher, René, Sunnewies 25, CH-8105 Regensdorf (CH)**

(74) Vertreter: **Pirner, Wilhelm et al, Patentabteilung der CIBA-GEIGY AG Postfach, CH-4002 Basel (CH)**

---

## Beschreibung

Die Erfindung betrifft ein Verfahren und eine Vorrichtung zur Herstellung von fotographischen Kopien ab scheibenförmigen Kopiervorlagen gemäss dem Oberbegriff des Patentanspruchs 1 bzw. des Patentanspruchs 8.

Die bisher bekanntgewordenen Kopiervorrichtungen dieser Art (vgl. WO 80100379) arbeiten in der Regel mit nur zwei (standardisierten Doppel-)Magazinen, wobei eines die zu verarbeitenden Vorlagenscheiben enthält und das andere die verarbeiteten Vorlagenscheiben aufnimmt. Mit diesen bekannten Vorrichtungen ist nur ein diskontinuierlicher Kopierbetrieb möglich, da die beiden Magazine jeweils nach Abarbeitung des Vorlagenvorrats ausgewechselt werden müssen, wozu der Kopierbetrieb unterbrochen werden muss. Diese systembedingten und insbesondere bei den heutigen Hochleistungskopieranlagen relativ häufigen Betriebsunterbrüche bewirken, dass die Leistungskapazität der genannten Hochleistungskopieranlagen nicht voll ausgenutzt werden kann, und werden daher als störend empfunden.

Durch die Erfindung soll nun dieser Mangel behoben und insbesondere ein Kopierverfahren und eine Kopiervorrichtung der eingangs definierten Art dahingehend verbessert werden, dass ein praktisch kontinuierlicher, unterbruchloser Kopierbetrieb möglich ist.

Das erfindungsgemässe Kopierverfahren und die entsprechende Kopiervorrichtung sind in den Patentansprüchen 1 und 8 beschrieben. Bevorzugte Ausgestaltungen und Weiterbildungen ergeben sich aus den abhängigen Ansprüchen.

Im folgenden wird die Erfindung anhand der Zeichnung näher erläutert. Es zeigen:

Fig. 1 eine vereinfachte Frontansicht eines Ausführungsbeispiels einer erfindungsgemässen Kopiervorrichtung,

Fig. 2 einen Grundriss der Vorrichtung mit schematisch angedeutetem Transportweg der Kopiervorlagen,

Fig. 3 und 4 je eine schematisierte Darstellung der Transportmittel für die Kopiervorlagen in zwei charakteristischen Bewegungsphasen,

Fig. 5a und 5b je einen Detailschnitt durch die Vorrichtung gemäss der Linie V-V der Fig. 3,

Fig. 6a und 6b je einen Detailschnitt nach der Linie VI-VI der Fig. 3,

Fig. 7a und 7b je einen Detailschnitt nach der Linie VII-VII der Fig. 4,

Fig. 8a-8c je einen Detailschnitt nach der Linie VIII-VIII der Fig. 4,

Fig. 9a und 9b je einen Detailschnitt nach der Linie IX-IX der Fig. 4,

Fig. 10a und 10b je einen Detailschnitt nach der Linie X-X der Fig. 4,

Fig. 11a und 11b je einen Ausschnitt aus Fig. 10a bzw. 10b in Draufsicht,

Fig. 12 eine Seitenansicht des Auswurfantriebs für die Kopiervorlagen aus den Magazinen in Richtung des Pfeils XII in Fig. 3,

Fig. 13 einen Detailschnitt nach der Linie XIII-XIII der Fig. 3,

Fig. 14a und 14b je eine Ansicht gemäss dem Pfeil XIV in Fig. 13 in zwei verschiedenen Bewegungsphasen und

Fig. 15 einen Schnitt durch die gesamte Transportmechanik für die Vorlagenscheiben entlang der Linie XV-XV der Fig. 3.

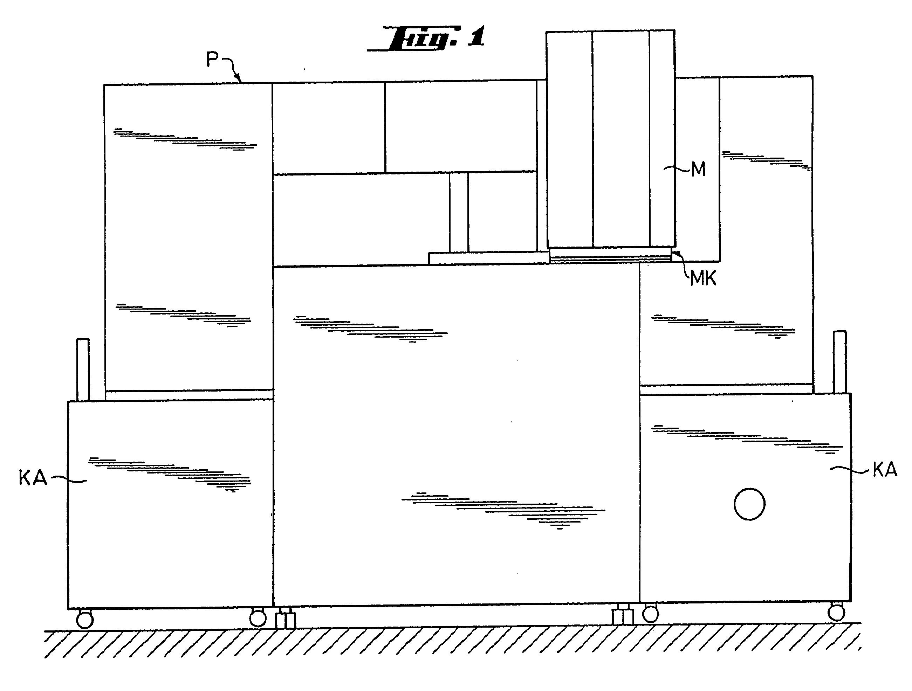

Die äussere Gestalt der erfindungsgemässen Kopiervorrichtung geht aus Fig. 1 hervor. Sie entspricht weitestgehend dem für herkömmliche streifenförmige Kopiervorlagen eingerichteten automatischen Printer 3141 der Firma Gretag AG, Regensdorf, Schweiz, und besteht aus der eigentlichen, in einem schrankförmigen Gehäuse untergebrachten Kopiervorrichtung P, dem sogenannten Printer, und zwei an diesen angekoppelten Kassetten K für das unbelichtete und das belichtete fotographische Papier. Im Unterschied zur bekannten Kopiervorrichtung ist die erfindungsgemässe Vorrichtung zur Verarbeitung von Kopiervorlagen in Scheibenform, sogenannten Discs ausgebildet. Abgesehen von diesem Unterschied und den damit zusammenhängenden konstruktiven Einzelheiten entspricht die Kopiervorrichtung, insbesondere was die eigentliche kopiertechnische Behandlung (fotoelektrische Ausmessung der Kopiervorlagen, Belichtung, Belichtungssteuerung usw.) anbelangt, weitestgehend dem schon genannten bekannten Printer 3141, so dass sich die folgende Beschreibung auf die durch die Scheibenform der Kopiervorlagen bedingten Unterschiede beschränken kann.

Die im folgenden der Kürze halber Discs genannten scheibenförmigen Kopiervorlagen befinden sich üblicherweise in einem standardisierten Doppelmagazin M, wo sie auf zwei in je einer Magazinkammer befindlichen Dornen oder Spindeln aufgefädelt sind. Jede Magazinkammer kann dabei bis zu etwa 105 Discs aufnehmen (siehe z.B. das sogenannte Disc-Magazin 2610/3510 der Firma Eastman Kodak Corp.).

Die Kopiervorrichtung ist nun mit noch näher zu beschreibenden Mitteln ausgestattet, um diese Discs eine nach der anderen aus dem Magazin zu entnehmen, einer Reihe von Behandlungs- und Bearbeitungsstationen zuzuführen und dann wieder in einem anderen (leeren) Magazin zu versorgen.

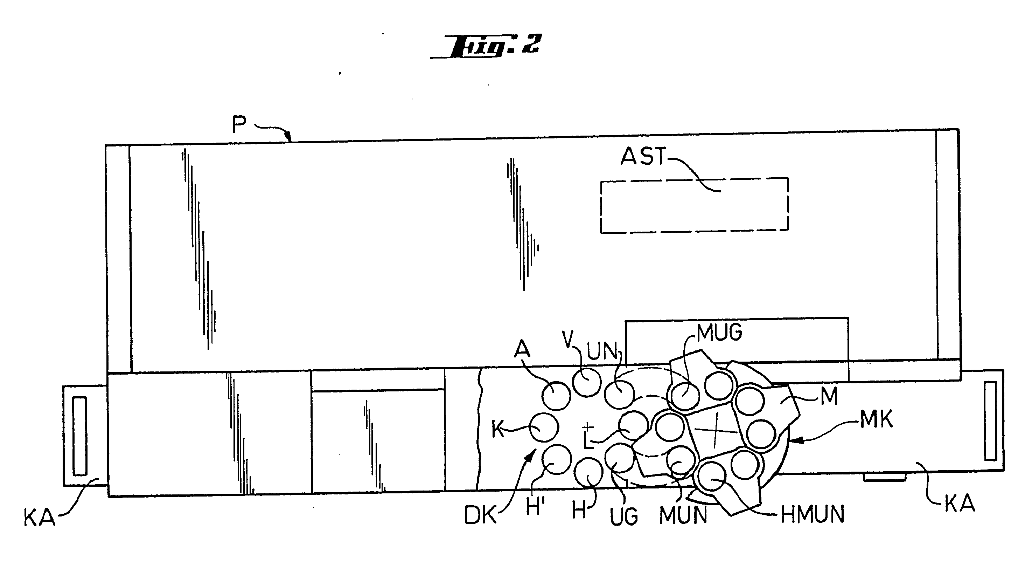

Der Transportweg der Discs ist in Fig. 2 schematisch dargestellt: Auf einem Magazinkarussell MK befinden sich vier Doppelmagazine M, von denen jeweils nur zwei gleichzeitig aktiv sind. Eines davon (das jeweilige Abgabemagazin) enthält die zu kopierenden Discs, das andere (das jeweilige Aufnahmemagazin) nimmt die Discs nach dem Kopiervorgang auf. Die beiden übrigen Magazine enthalten weitere zu kopierende Discs bzw. bereits kopierte Discs und dienen zur Aufrechterhaltung eines kontinuierlichen Kopierbetriebs.

Vom jeweils aktiven vollen Abgabemagazin gelangen die Discs auf ein Disc-Karussell DK, welches sie von einer Übernahmestelle UN längs eines kreisförmigen Transportwegs durch eine Vorbereitungsstation V, eine Abtaststation A und eine Kopierstation K zu einer Übergabestelle UG befördert, von wo sie dann in das bereitstehende leere Aufnahmemagazin transportiert werden. Der kreisförmige Transportweg umfasst, wie aus der Zeichnung hervorgeht, acht Stationen. Fünf davon wurden bereits erwähnt, eine (H) dient zur manuellen Eingabe von z.B. Test-Discs, die Station H' wird normalerweise nicht benutzt und die Station L ist eine Leerstelle, in die die von den Magazinen kommenden Discs nie gelangen. Durch diese Leerstelle laufen lediglich an der Handeingabestation H manuell eingeführte Discs.

In der Vorbereitungsstation V werden die Discs in eine genaue definierte Drehstellung (sogenannte Home-Position) gebracht, bei der ein bestimmtes Bildfeld radial aussen zu liegen kommt. Gleichzeitig werden die Discs in dieser Station auch von allfälligem Staub befreit. Ausserdem werden die auf den Discs vorhandenen optischen und magnetischen Informationen abgelesen.

In der Abtaststation A werden sämtliche Bildstellen (Bilder) jeder einzelnen Disc der Reihe nach punktweise fotoelektrisch ausgemessen. Die Messwerte werden gespeichert und zu Belichtungsdaten verarbeitet.

In der Kopierstation K werden dann die Bilder der Discs aufgrund der bei der Abtastung aus den Messdaten gewonnenen Belichtungsdaten belichtet. Die Belichtungssteuerung erfolgt genau gleich wie bei den herkömmlichen streifenförmigen Kopiervorlagen und braucht deshalb hier nicht besonders erläutert zu werden.

Einzelheiten über Vorbereitungsstation V, Abtaststation A und Kopierstation K finden sich im übrigen z.B. auch in den US-A 4 230 664 und US-A 4 204 733, so dass an dieser Stelle auch darauf nicht mehr näher eingegangen zu werden braucht. Ferner wird auch auf das schon genannte Disc-Attachment 70/90 zum Printer 3510 der Firma Eastman Kodak Comp. hingewiesen.

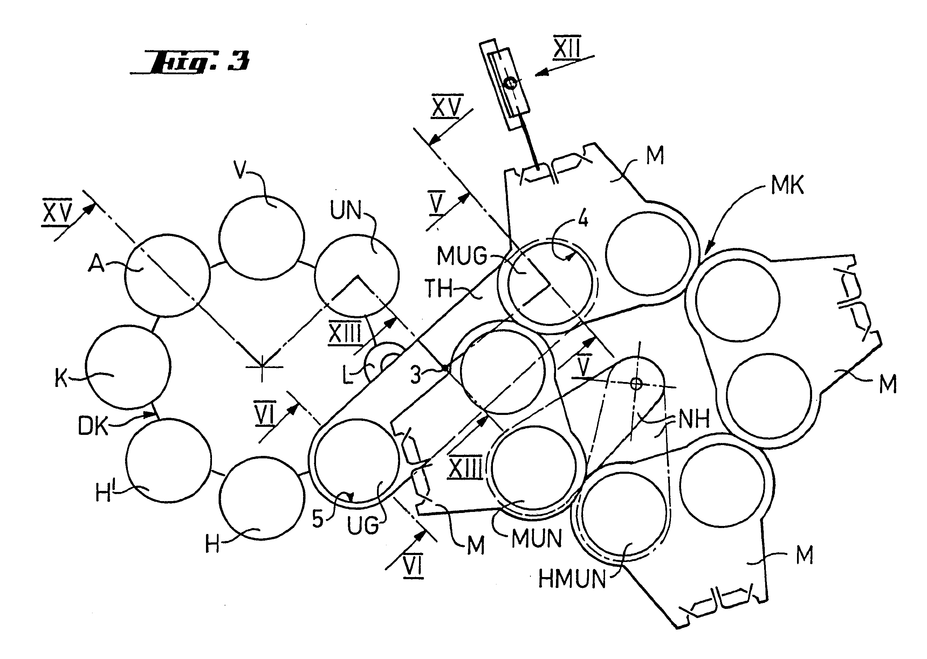

Im folgenden werden der Transport der Discs und die dazu nötigen Mittel anhand der Figuren 3-9 näher erläutert.

Die hier vier Doppelmagazine M sitzen, wie schon erwähnt, auf einem schrittweise drehbar angetriebenen Magazinkarussell MK. Das Magazinkarussell MK hat, entsprechend den insgesamt acht Disc-Spindeln in den vier Doppelmagazinen M, acht diskrete Drehstellungen. Drei dieser Drehstellungen oder Positionen haben eine besondere Funktion. An der mit MUG bezeichneten Position werden die Discs aus dem jeweils dort befindlichen Magazinteil (Magazinhälfte) entladen, an der Position MUN werden sie normalerweise in das leere Magazin zurückgeführt. Die Position HMUN ist zum Rückladen von solchen Discs vorgesehen, die sich noch auf dem Transportweg befinden, wenn sich das Magazinkarussell schon um einen Schritt weitergedreht hat. Näheres darüber wird noch weiter unten erläutert. Alle übrigen Drehstellungen oder Positionen des Magazinkarussells sind Leerstellen, an denen Discs weder geladen noch entladen werden.

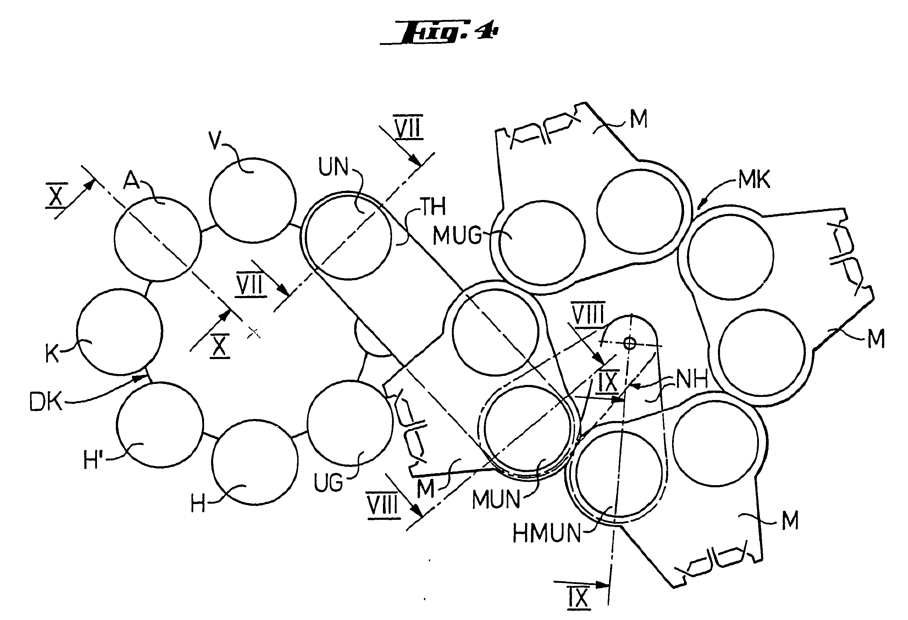

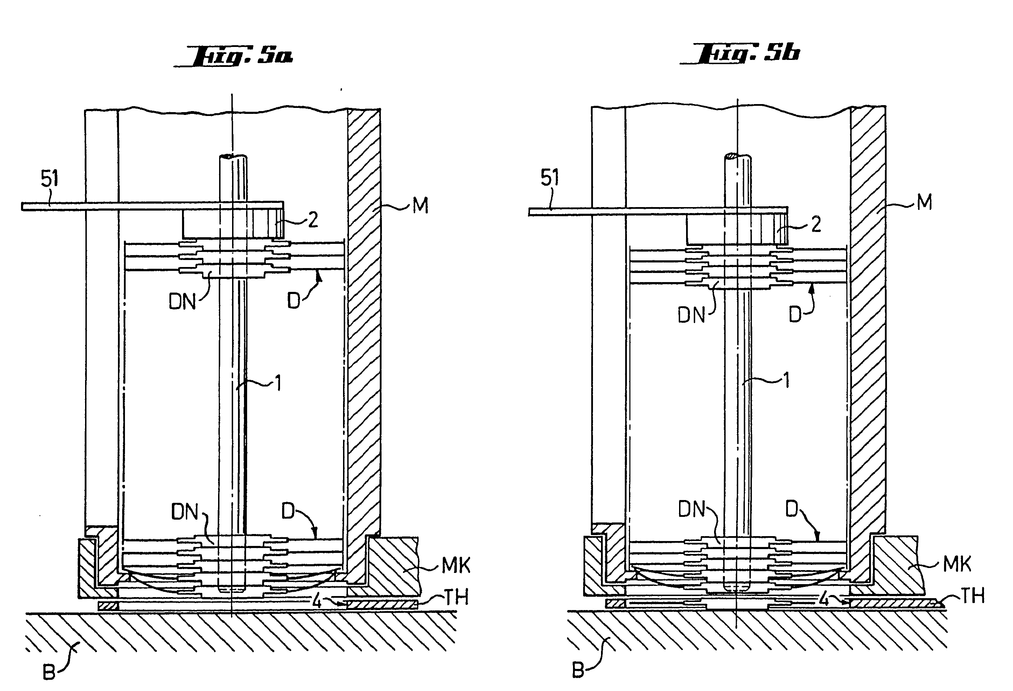

Die Fig. 3 und 5 zeigen die Stellung der einzelnen Transportorgane zu Beginn eines Entlade-Lade-Zyklus. Im an der Magazinübergabestelle MUG befindlichen Magazin M (Magazinhälfte) befinden sich auf einer vertikalen Spindel 1 eine Reihe von Discs D. Die unterste davon wird jetzt mittels eines Ausstossers 2 (in noch näher zu beschreibender Weise) nach unten ausgestossen, so dass sie mit ihrer Nabe DN auf einer ortsfesten Bühne B zu liegen kommt. In der Ebene zwischen der Bühne B und dem Magazinkarussell MK ist eine Verbindungseinrichtung in Form eines zweiarmigen Transporthebels TH um eine Achse 3 zwischen den zwei in den Fig. 3 und 4 gezeigten Endstellungen hin- und herschwenkbar angeordnet. Der Transporthebel TH hat an seinen beiden Enden je eine kreisförmige Ausnehmung 4 bzw. 5, die zur Aufnahme je einer Disc D dient. Fig. 5b zeigt, wie die aus dem Magazin M ausgestossene Disc D in der Ausnehmung 4 des Transporthebels TG liegt.

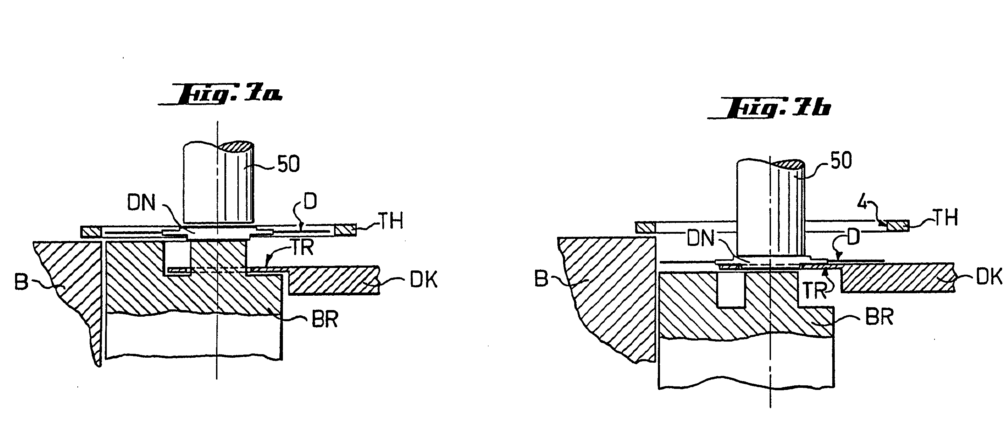

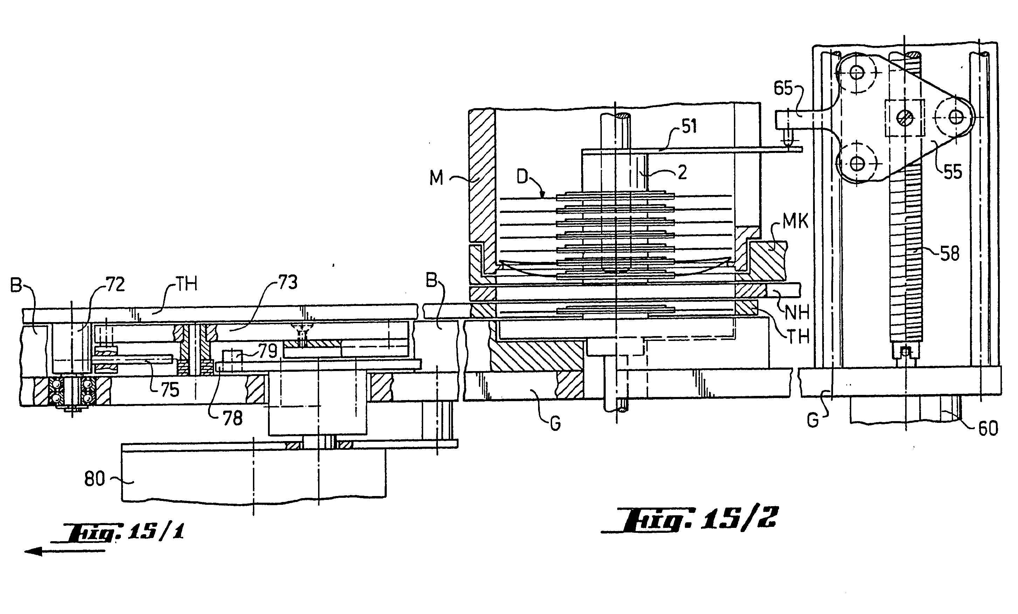

Als nächster Schritt wird der Transporthebel ZH um 90° in die in Fig. 4 gezeigte Lage verschwenkt, wobei die in seiner Ausnehmung 4 befindliche Disc D in die Übernahmestation UN des Disc-Karussells DK befördert wird. Während des Transports gleitet die Disc auf einer hochgebogenen Brücke BR, so dass sie nicht nach unten aus dem Transporthebel TR herausfallen kann (siehe auch Fig. 15). Sobald die Disc D in der Übernahmestelle UN angekommen ist (Fig. 7a), senkt sich die Brücke BR ab und die Disc D kommt nun mit ihrer Nabe DN auf bzw. in einen Tragring TR des Disckarussells DK zu liegen (Fig. 7b). Die Absenkbewegung wird von einem heb- und senkbaren Dorn 50 unterstützt.

Nunmehr schwenkt der Transporthebel TH in seine in Fig. 3 gezeigte Ausgangslage zurück und gleichzeitig dreht sich das Disckarussell DK um einen Schritt, so dass die eben in der Übernahmestelle UN angekommene Disc in die Vorbereitungsstation V weitertransportiert wird.

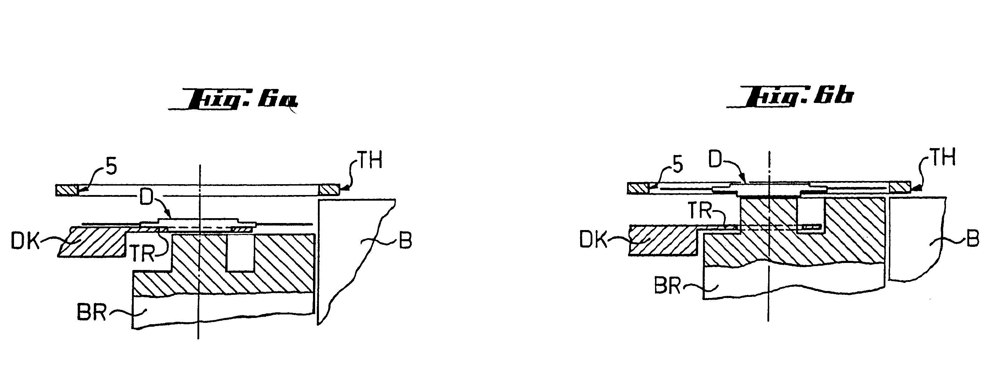

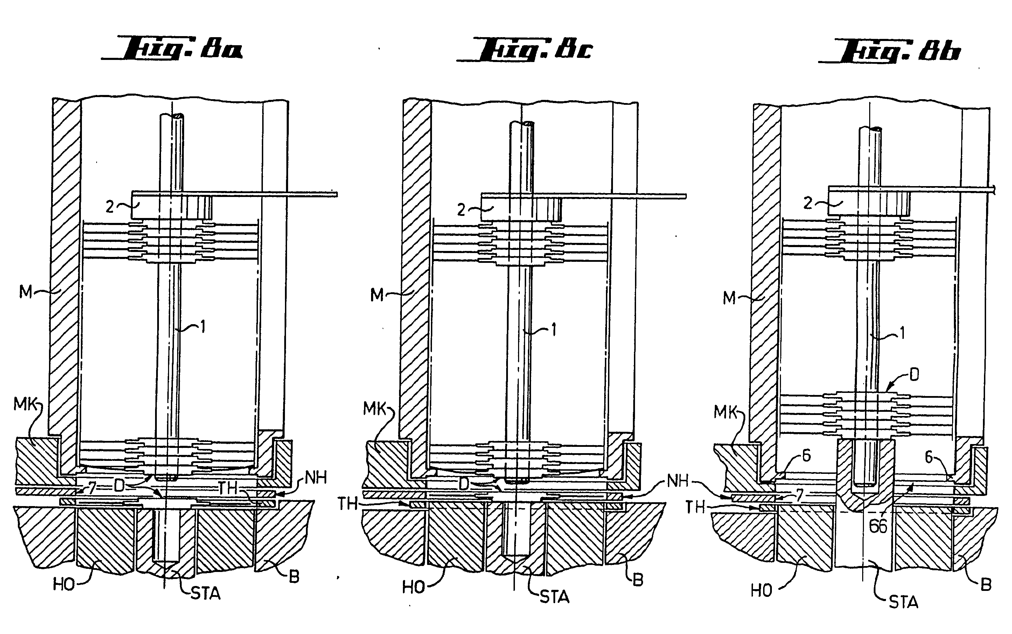

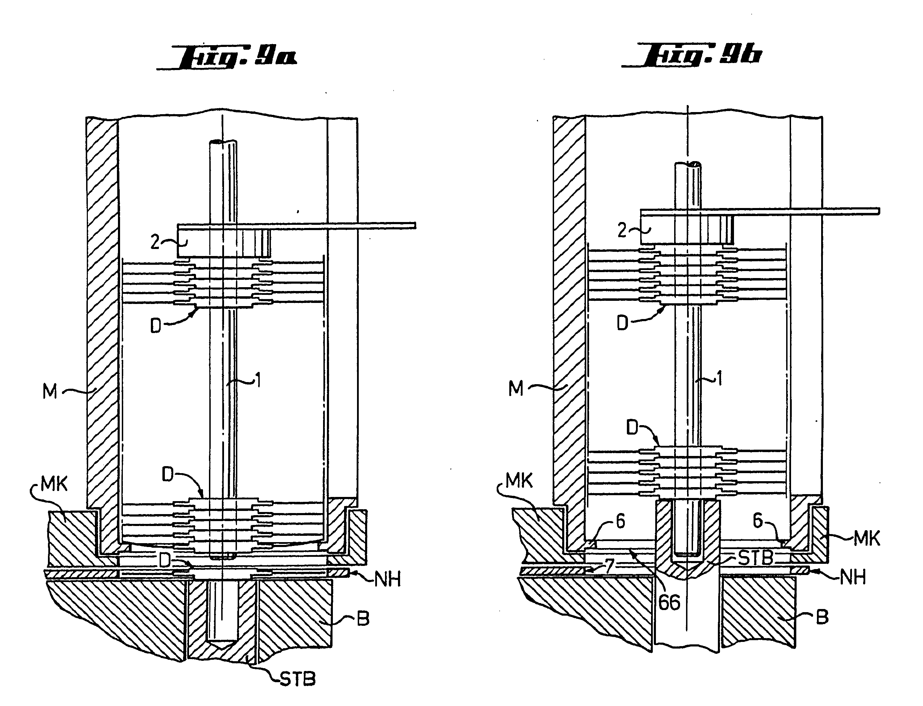

Die Rückladung der den Transportweg auf dem Disckarussell DK bereits zurückgelegt habenden Discs in das leere Magazin erfolgt analog. Bei der in Fig. 3 gezeigten Stellung des Transporthebels TH befindet sich seine Ausnehmung 5 in der Übergabestation UG des Disckarussells DK (Fig. 6a). Durch Anheben der Brücke BR auf das Niveau der Bühne B wird die im Disckarussell DK befindliche Disc D auf dem Transportring TR ausgehoben und in die Aufnahmeöffnung 5 des Transporthebels TH befördert (Fig. 6b). Beim drauffolgenden Verschwenken des Transporthebels TH in die in Fig. 4 gezeigte Stellung wird dann die Disc D in die Übernahmestellung MUN des Magazinkarussells MK transportiert (Fig. 8a). An dieser Stelle befindet sich in der Bühne B ein Stapelorgan STA, welches die Disc D hochebt und in das in dieser Position befindliche Magazin M einbringt. Das Wiederherausfallen aus dem Magazin wird durch Einwärtsvorsprünge 6 in der Nähe der Auswurföffnung 66 am unteren Ende der Magazine verhindert (Fig. 8b).

Auf die vorstehend beschriebene Weise werden die Discs sukzessive aus dem jeweils in der Übergabestelle MUG befindlichen Magazin entladen, mittels des Transporthebels TH auf das Disckarussell DK gegeben, von dort nach dem Durchlaufen des durch das Disckarussell vorgegebenen Transportweg mittels des Transporthebels TH in die Übernahmestelle MUN gebracht und schliesslich in das jeweils dort befindliche Leer- bzw. Aufnahmemagazin befördert.

Sobald nun das in der Übergabestelle MUG des Magazinkarussells MK befindliche Magazin (genauer die jeweilige Magazinhälfte) leer ist, dreht das Magazinkarussell im einen Schritt weiter, so dass sich dann z.B. die zweite Magazinhälfte oder die erste Hälfte eines neuen Doppelmagazins in der Übergabestelle MUG befindet. Das gleiche gilt auch für die Magazine-(hälften) in der Übernahmestelle MUN.

Nach dem Weiterdrehen des Magazinkarussells MK befinden sich noch sechs Discs von der zuvor entleerten Magazinhälfte auf dem Disckarussell DK. Damit die Zuordnung zwischen Discs und Magazinhälften gewahrt bleibt, d.h., alle von einer Magazinhälfte stammenden Discs wieder in ein und dieselbe Hälfte des Leermagazins geladen werden, ist nun ein Nachreichetransportmittel vorgesehen, welche die genannten restlichen sechs Discs dem inzwischen weitergewanderten Magazin (bzw. der entsprechenden Magazinhälfte) nachreicht.

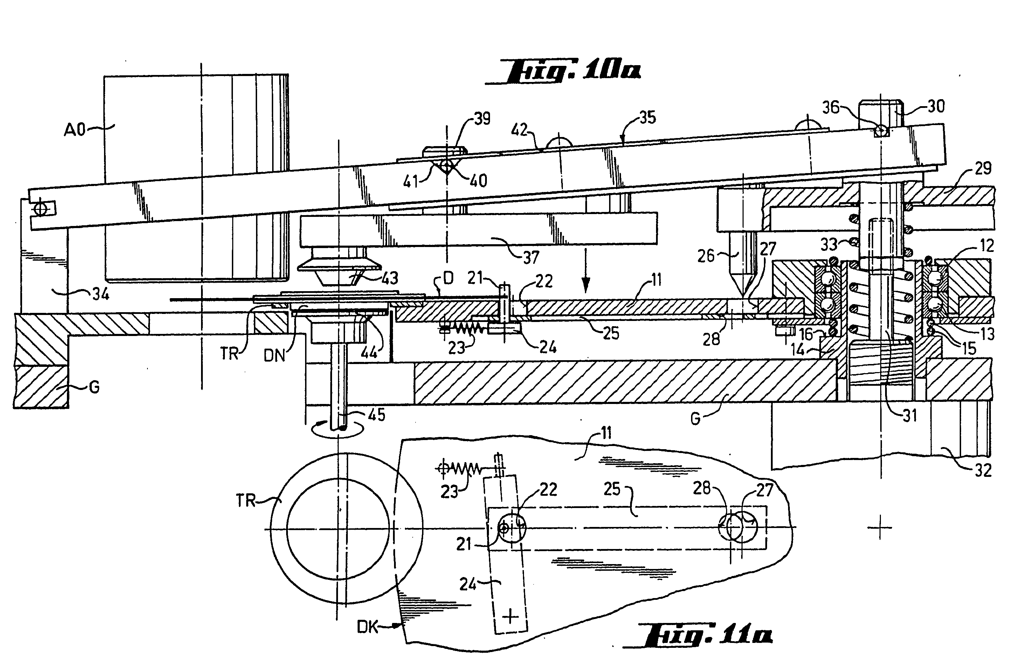

Dieses Nachreichetransportmittel besteht aus einem Nachreichehebel NH, der um die Achse des Magazinkarussells MK zwischen der Übernahmestellung MUN und der Hilfsübernahmestellung HMUN hin und her schwenkbar ist, und zwar in einer Ebene zwischen dem Transporthebel TH und dem Magazinkarussell MK (Fig. 8a-c, 9a und b). Dieser Nachreichehebel NH besitzt an seinem freien Ende eine Aufnahmeöffnung 7 für die Discs D ähnlich den Öffnungen 4 und 5 des Transporthebels TH.

Nach dem Weiterschalten des Magazinkarussells MK sorgt nun eine entsprechende Steuerung dafür, dass die ersten sechs in der Übernahmeposition MUN eintreffenden Discs nicht direkt in das darüber befindliche Magazin M eingeführt werden, sondern zunächst um einen Schritt des Magazinkarussells MK in die Hilfsübernahmestellung HMUN weitertransportiert und in das dort befindliche Magazin gebracht werden. Dazu hebt ein in der Übernahmestellung MUN befindliches Hebeorgan HO zusammen mit dem Stapelorgan STA die Disc in das Niveau des Nachreichehebels NH (Fig. 8c), und dieser transportiert sie dann in die Hilfsübernahmestellung HMUN (Fig. 9a). In dieser befindet sich ein zweites Stapelorgan STB, welches dann die Disc D wie das Stapelorgan STA in der normalen Übernahmestelle MUN in das darüberliegende Magazin M einführt (Fig. 9b). Danach schwenkt der Nachreichehebel NH zurück und holt die nächste Disc usw., bis alle sechs Discs auf diese Weise im richtigen Magazin versorgt sind. Danach bleibt der Nachreichehebel NH inaktiv, bis das Magazinkarussell MK einen neuen Transportschritt vollführt.

Anstelle des hin- und herschwenkbaren Nachreichehebels NH könnte natürlich auch ein weiteres zum Magazinkarussell MK koaxial drehbares Karussell mit entsprechenden Discaufnahmeöffnungen vorgesehen sein.

Von den vier auf dem Magazinkarussell MK befindlichen Doppelmagazinen M sind jeweils nur zwei aktiv: eines enthält die zu kopierenden Discs, das andere nimmt die jeweils verarbeiteten Discs auf. Nach dem Weiterschalten des Karussels MK wird das ursprünglich abgebende Magazin (bzw. die jeweilige Magazinhälfte) zum Aufnahmemagazin, und an die Stelle des ursprünglichen Abgabemagazins (bzw. der abgebenden Hälfte) tritt die zweite Hälfte desselben oder die ersten Hälfte eines neuen Magazins. Zwei Magazine sind, mit Ausnahme der Zeit, während der die genannten sechs restlichen Discs nachgereicht werden, ständig inaktiv. Diese können dann beliebig aus dem Karussell entnommen, entladen und durch neue, mit neuen zu verarbeitenden Discs gefüllte Magazine ersetzt werden. Auf diese Weise ist ein unterbruchloser Betrieb der Kopiereinrichtung gewährleistet. Eine Sperre sorgt dafür, dass während der Nachreichunmg der sechs Discs das betreffende Magazin nicht aus dem Karussell entnommen werden kann.

Im vorstehend beschriebenen Ausführungsbeispiel wird die Erhaltung der Zuordnung der Discs zu jeweils ein und demselben Magazin durch den Nachtransport der kritischen Discs zu ihrem weitergewanderten Aufnahmemagazin gewährleistet. Das Problem könnte — wenngleich auch mit in der Praxis grösserem Aufwand — auch dadurch gelöst werden, dass zwei Magazinübergabestellen — die bisherige und eine zusätzliche, um einen Schritt vorher angeordnete — vorgesehen wären und nach dem Leerwerden eines Magazins zuerst sechs Discs aus dem nächsten vollen Magazin entnommen würden, bevor das Magazinkarussell weitergeschaltet würde.

Ferner sind im vorstehenden Ausführungsbeispiel die Disc-Magazine auf einem Magazinkarussell angeordnet. Anstelle dieses Karussells könnte selbstverständlich auch irgendeine andere Transporteinrichtung vorgesehen sein, welche eine gewisse Speicherfähigkeit, d.h. Platz für wenigstens drei oder mehr Magazine aufweist und die diese Magazine sukzessive durch die Übergabeposition und die beiden Übernahmepositionen (oder die beiden Übergabepositionen und die dann einzige Übernahmeposition) führt. Es sind beliebige offene und geschlossene Transportwege und Transportmittel für die Magazine möglich, die alle als im Rahmen der vorliegenden Erfindung liegend betrachtet werden und für die daher Schutz beansprucht wird.

Zum Antrieb der beweglichen Teile sind Elektromotoren oder Elektromagnete vorgesehen. Sämtliche Bewegungsabläufe sind durch eine entsprechende elektronische Steuerung, vorzugsweise auf Rechnerbasis, gesteuert. Derartige Steuerungen sind dem Fachmann geläufig und bedürfen daher keiner besonderen Erläuterung. Sie sind hier (Fig. 2) daher nur symbolisch durch einen Block AST angedeutet.

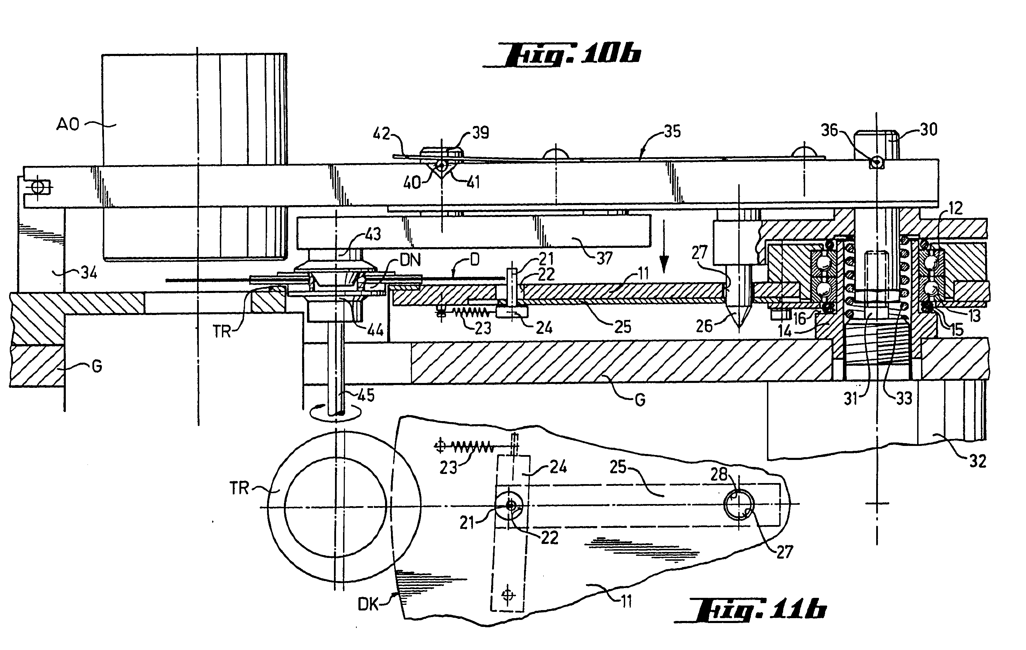

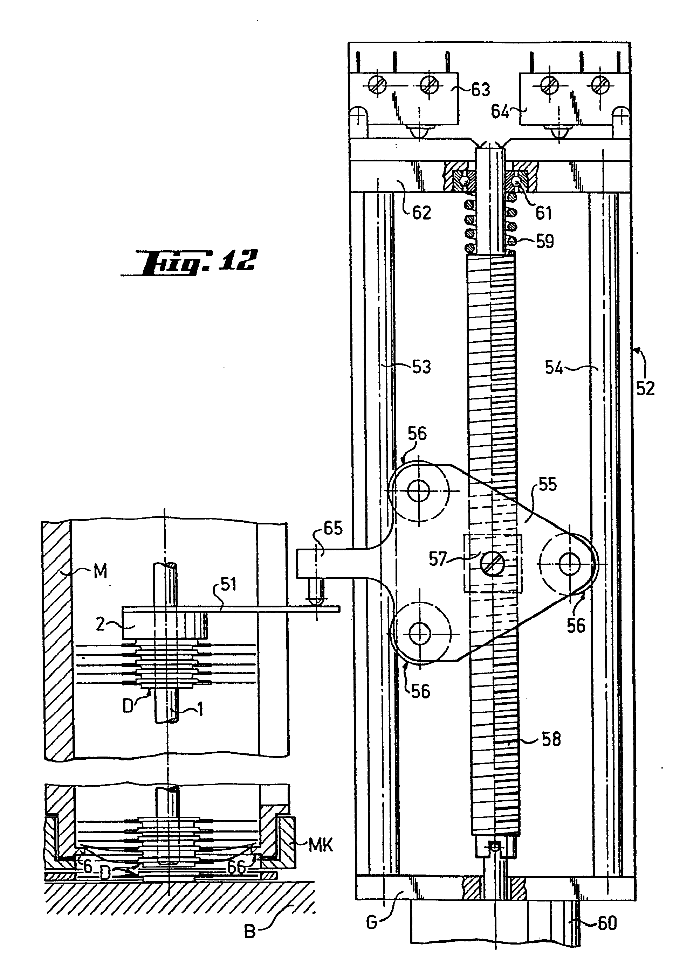

Die Fig. 10a, b und 11a, b zeigen Details aus dem Disckarussell DK, und zwar in einem Schnitt längs der Linie X-X der Fig. 4. Das Disckarussell DK besteht im wesentlichen aus einer kreisförmigen Platte 11, an deren Umfang in gleichmässigen Abständen die schon genannten acht Tragringe TR für die Discs D angeordnet sind. Die Platte 11 ist via Kugellager 12 und 13 auf einem in einer maschinenfesten Grundplatte G befestigten Lagerstutzen 14 drehbar gelagert und ist gleichzeitig etwas axial heb- und senkbar. Das vertikale Auflager für die Platte 11 bilden zwei elastische O-Ringe 15, die sich an einer Schulter 16 des Lagerstutzens 14 abstützen.

Jedem Tragring TR ist ein Arretierstift 21 zugeordnet, der in einer Bohrung 22 in der Platte 11 radial verschiebbar angeordnet ist. Je eine Feder 23 hält ihn über einen Hebel 14 normalerweise in seiner radial auswärtigen Stellung fest, in welcher er in eine der am Umfang der Disc D angeordneten Kerben eingreift und damit die Disc in einer definierten Drehstel-

lung arretiert (Fig. 10a, 11a). Unter der Platte 11 sind acht Zugstangen 25 radial ein- und auswärts verschiebbar gelagert. Mit diesen Zugstangen 25 können die Arretierstifte 21 radial einwärts bewegt und damit ausser Eingriff mit den Umfangskerben der Discs gebracht werden. Die Betätigung dieser Zugstangen erfolgt über einen konischen Dorn 26, der durch eine Bohrung 27 in der Platte 11 nach unten verschoben werden kann und dann mit einer konischen Spitze in eine Bohrung 28 in den Zugstangen 25 eingreift und diese dadurch einwärts verschiebt (Fig. 10b, 11b).

Der konische Dorn 26 sitzt auf einem Träger 29, der koaxial zur Achse des Disckarussells DK vertikal heb- und senkbar gelagert ist. Der Träger 29 sitzt auf einem Bolzen 30, und dieser ist mit dem Gewindezapfen 31 eines unter der Grundplatte G befestigten Zugmagnets 32 verbunden. Gewindezapfen 31 und Bolzen 30 befinden sich im hohlen Lagerstutzen 14. Ebenfalls darin befindet sich eine Schraubenfeder 33, welche den Träger 29 bei nicht erregtem Zugmagnet 32 in der in Fig. 10a gezeigten oberen Stellung hält. Mittels des Zugmagnets 32 kann der Träger 29 und damit der Dorn 26 niedergedrückt werden (Fig. 10b).

An auf der Grundplatte G befestigten Pfosten 34 an der Peripherie des Disckarussells DK ist eine Gabel 35 angelenkt, deren zentrales Ende mittels eines Querstifts 36 am zentralen Bolzen 30 des Trägers 29 befestigt ist. Diese Gabel 35 wird somit bei Betätigung des Zugmagnets 32 ebenfalls nach unten bewegt (Fig. 10b) und entsprechend durch die Feder 33 wieder in ihre obere Normalstellung zurückbewegt (Fig. 10a). An der Gabel 35 ist eine Tragplatte 37 um einen Querstift 40 schwenkbar gelagert. Ein an der Tragplatte 37 befestigter Bolzen 39 ist mittels des Querstifts 40, der in einer Kerbe 41 der Gabel liegt, mit dieser gekoppelt. Eine an der Gabel 35 befestigte Blattfeder 42 hält den Querstift 40 in der Kerbe federnd fest. Am radial äusseren Ende der Tragplatte ist ein Zentrierdorn 43 um eine vertikale Achse frei drehbar gelagert. Wenn die Gabel 35 und damit die Tragplatte 37 und der Zentrierdorn 43 abgesenkt sind (Fig. 10b), greift der Zentrierdorn 43 in die Nabe DN der auf einem Drehteller 44 aufliegenden Disc D ein und zentriert diese. In dieser Stellung ist der Querstift 40 etwas aus den Kerben 41 der Gabel 35 ausgehoben, so dass allfällige Toleranzen kompensiert werden.

Die Disc D liegt normalerweise auf dem Tragring TR des Disckarussells DK auf. Bei abgesenktem Träger 29 wird gleichzeitig auch das Disckarussell DK entgegen der elastischen Wirkung der beiden O-Ringe 15 abgesenkt, so dass die Disc dann nur mehr auf dem Drehteller 44 aufliegt und somit berührungsfrei gedreht werden kann. Der Antrieb des Drehtellers 44 erfolgt über eine Welle 45 und einen nicht dargestellten Motor.

Die Discs D müssen in der Vorbereitungsstation V, der Abtaststation A und der Kopierstation K um die eigene Achse gedreht werden. Demtentsprechend sind in diesen drei Stationen entsprechende Drehteller 44 (und Antriebe) vorgesehen. Entsprechend sind auch jeder dieser drei Stationen ein eigener konischer Dorn 26 und ein eigener Zentrierdorn 43 zugeordnet.

Die Dorne 26 sitzen alle auf dem gemeinsamen Träger 29, und die Zentrierdorne 43 sind alle auf der gemeinsamen Trägerplatte 37 angeordnet; letztere erstreckt sich dazu über die genannten drei Stationen. Auf diese Weise können die Freigabe der Discs über die Arretierstifte 21 und die Zentrierung der Discs über die Zentrierdorne 43 in allen drei Stationen über einen gemeinsamen, einzigen Antrieb (Zugmagnet 32) bewerkstelligt werden. In den übrigen Stationen des Disckarussells DK brauchen die Discs nicht rotiert zu werden, dementsprechend sind für diese Stationen keine Dorne 26 usw. vorgesehen.

Mit AO ist in den Fig. 10a und b eine Anordnung zur fotoelektrischen Ausmessung der Bildstellen der Discs bezeichnet. Solche Anordnungen sind bekannt und daher hier nicht näher erläutert.

Wie schon weiter vorne erwähnt, umfasst das Disckarussell DK auch eine Handeingabestation H. Diese ist frei zugänglich ausgebildet, so dass bei Bedarf eine Test-Disc oder dergleichen manuell eingeführt werden kann. Die elektronische Steuerung AST (Fig. 2) ist derart ausgebildet, dass im Falle einer Handeingabe der normale Entlade-Lade-Zyklus von und zu den Magazinen unterbrochen wird und die betreffende Disc direkt im Kreis durch die einzelnen Stationen und zurück zur Handeingabestation H transportiert wird.

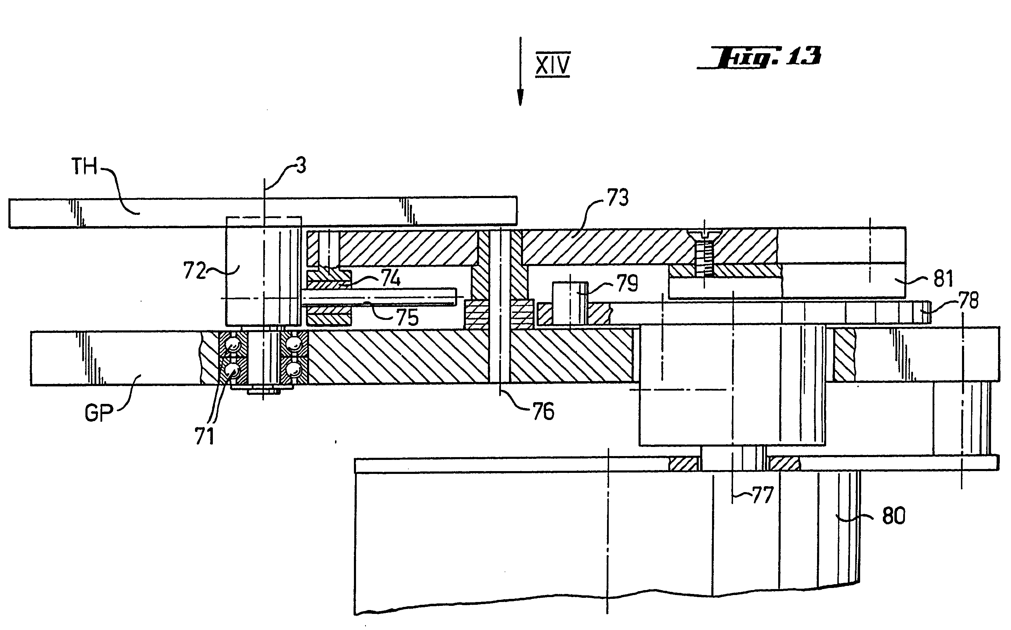

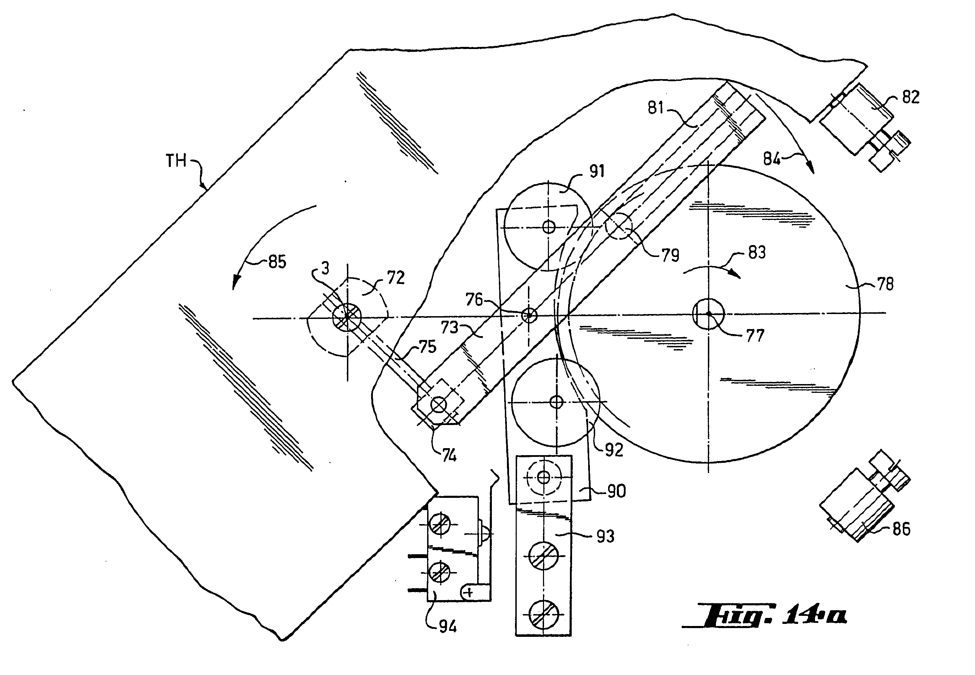

In Fig. 12 ist der Auswurfantrieb für die Discs aus den Magazinen näher dargestellt. Er ist an der Übergabeposition MUG des Magazinkarussells MK angeordnet (Fig. 3) und wirkt mit dem jeweils dort befindlichen Magazin M (bzw. der entsprechenden Magazinhälfte) zusammen. Die genormten Doppelmagazine M besitzen in jeder Magazinhälfte einen auf die Naben DN der auf der Spindel 1 aufgereihten Discs D drückenden Ausstosser 2, welcher über je einen durch die Rückwand des Magazins M nach aussen ragenden Bügel 51 betätigbar ist. An diesem Bügel greift der Auswurfantrieb an.

Der Auswurfantrieb umfasst einen maschinenfesten Rahmen 52, in dem zwei vertikale Rundstangen 53 und 54 befestigt sind. Diese dienen als Führung für einen Schlitten 55 mit drei Laufrollen 56. Anstelle der Laufrollen können auch Kugelbüchsen vorgesehen sein. Der Schlitten 55 ist mit einer Schlossmutter 57 versehen und über diese mittels einer vertikalen Gewindespindel 58 auf- und abbewegbar. Die Spindel 58 ist axial geringfügig verstellbar gelagert und mittels einer Schraubenfeder 59 federnd in ihrer unteren Endstellung gehalten. Zum Antrieb dient ein Reversier-Motor 60. Oberhalb eines das Lager 61 für die Spindel 58 tragenden Querhaupts 62 befinden sich zwei Mikroschalter 63 und 64, welche die axiale (vertikale) Position der Gewindespindel 58 abtasten.

Zum Auswerfen einer Disc D aus dem Magazin M (auf ein entsprechendes Auslösesignal der Steuerung AST hin) dreht sich die Gewindespindel 58 mittels des Motors 60 so, dass sich der Schlitten 55 abwärts bewegt und mittels eines Arms 65 auf den Bügel 51 des Ausstossers 2 drückt. Sobald die Disc D ausgeworfen ist (siehe z.B. Fig. 5b), kommt sie auf die Bühne B zu liegen. Dadurch wird dem weiteren Niederdrücken des Ausstossers 2 nun ein Widerstand entgegengesetzt und damit die Abwärtsbewegung des Schlittens 55 blockiert, was zur Folge hat, dass sich nunmehr die Gewindespindel 58 etwas entgegen der Feder 59 aufwärts bewegt. Sobald der eine Schalter 63 eine gewisse Aufwärts-Auslenkung der Gewindespindel 58 festgestellt hat, veranlasst er über eine geeignete elektronische Steuerung eine Umkehrung der Motor- und damit Spindeldrehrichtung, worauf sich die Spindel 58 wieder in ihre Ausgangsposition nach unten zurückbewegt, bis der andere Schalter 64 anspricht. Gleichzeitig wird dadurch auch der Druck auf den Ausstosser 2 weggenommen, so dass die ausgestossene Disc ohne Berührung mit der nächstfolgenden auf der Bühne B liegt (Fig. 5b). Bei Vorliegen des nächsten Auswurfbefehls wiederholt sich das Ganze von vorne.

Der Auswurfantrieb wird also durch den von den Discs beim Auswerfen erzeugten Gegendruck gesteuert. Er gewährleistet zuverlässig, dass bei jedem Auswurfvorgang jeweils nur eine einzige Disc aus dem Magazin entnommen wird.

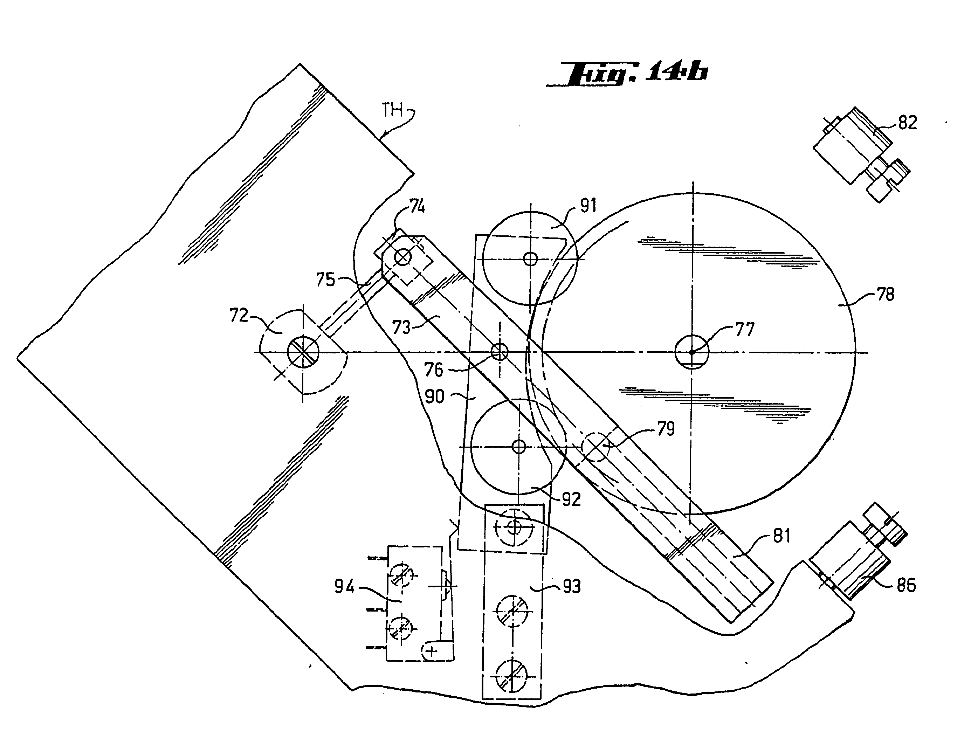

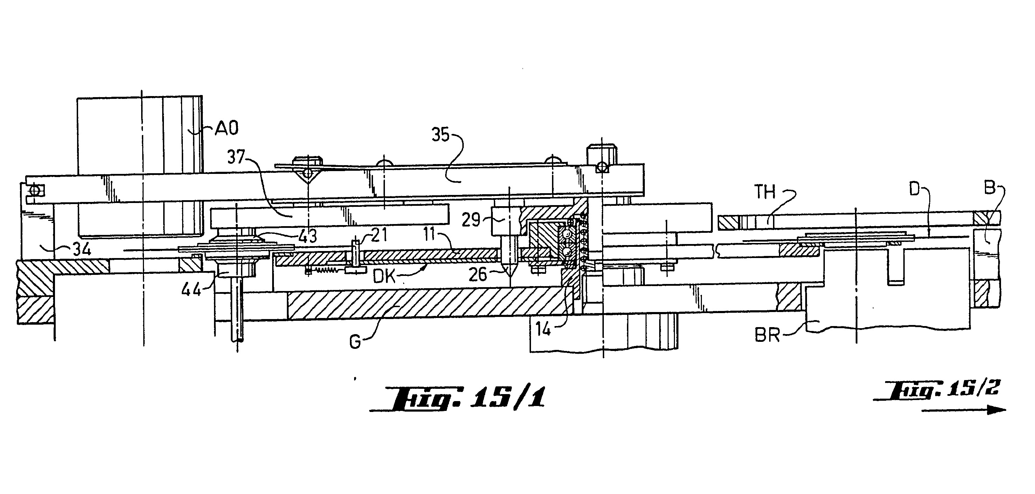

In den Fig. 13, 14a und 14b ist der Antrieb für den Transporthebel TH näher dargestellt.

In einer maschinenfesten Grundplatte GP ist über Kugellager 71 ein Drehkörper 72 um die Hebelschwenkachse 3 drehbar gelagert. Er trägt den Transporthebel TH und ist mit diesem drehfest verbunden. Im Abstand zur Achse 3 ist ein zweiarmiger Zwischenschwenkhebel 73 drehbar in der Grundplatte GP gelagert. Am kürzeren Hebelarm ist an der Unterseite eine Gleitlagerbüchse 74 drehbar befestigt. Diese Lagerbüchse führt eine zur Hebelschwenkachse 3 senkrechte Verbindungsstange 75, die unbeweglich mit dem Drehkörper 72 verbunden ist. An der Unterseite des längeren Arms des Zwischenschwenkhebels 73 befindet sich ein nach unten offenes U-Profil 81, das parallel zum Zwischenschwenkhebel 73 ausgerichtet ist. Etwa im selben Abstand wie der Drehkörper 72, aber auf der entgegengesetzten Seite der Achse 76 des Zwischenschwenkhebels, ist um eine Achse 77 eine Kurbelscheibe 78 mit einem Kurbelstift 79 drehbar in der Grundplatte GP gelagert und von einem Getriebemotor 80 drehbar angetrieben. Bei Drehung der Kurbelscheibe 78 greift der Kurbelstift 79 nach Art eines Malteser-Getriebes in das U-Profil 81 ein und verschwenkt den Zwischenschwenkhebel 73 und damit schliesslich über die Gleitlagerbüchse 74, die Verbindungsstange und den Drehkörper 72 den Transporthebel TH.

Die Funktionsweise der Anordnung geht aus den Fig. 14a und b hervor.

In Fig. 14a befindet sich der Transporthebel TH in seiner einen Endstellung, in der er an einem Anschlag 82 anliegt. Zum Verschwenken in die in Fig. 14b gezeigte Endstellung dreht sich die Kurbelscheibe 78 in Richtung des Pfeils 83, wobei der Kurbelstift 79 in das U-Profil 81 eingreift und den Zwischenschwenkhebel 73 in Richtung des Pfeils 84 verschwenkt. Über die Gleitlagerbüchse 74 und die Verbindungsstange 75 bewirkt dies eine Verschwenkung des Transporthebels TH in Richtung des Pfeils 85 bis in die in Fig. 14b gezeigte Lage, in der er an einem Anschlag 86 anliegt. Der Abstand zwischen der Achse 76 und der Achse der Gleitlagerbüchse 74 ist so gewählt, dass sich ein geringfügiger Überweg ergibt und die Verbindungsstange 75 leicht elastisch verspannt (gekrümmt) wird, wodurch der Transporthebel TH automatisch elastisch an seinem Anschlag 86 festgehalten und damit exakt positioniert wird und bleibt, auch wenn der Kurbelstift 79 bei weiterer Drehung der Kurbelscheibe 78 z.B. aufgrund einer Nachlaufbewegung des Antriebsmotors das U-Profil 81 verlässt und damit nicht mehr mit dem Zwischenschwenkhebel 73 in Eigriff steht.

Zum Rückschwenken des Transporthebels TH in seine in Fig. 14a gezeigte Endstellung wird die Drehrichtung der Kurbelscheibe 78 umgekehrt und alle Vorgänge spielen sich in umgekehrter Reihenfolge ab. Auch in dieser Endstellung wird die Verbindungsstange 75 verspannt und bewirkt dadurch eine exakte, von der Kurbelscheibenstellung unabhängige Positionierung.

In den Fig. 14a und b ist ferner noch eine Anordnung zur Drehrichtungsumkehr für die Kurbelscheibe 78 dargestellt. Diese Anordnung umfasst eine um die Zwischenhebelschwenkachse 76 schwenkbare Wippe 90 mit zwei Rollen 91 und 92, einen Schleifbügel 93 und einen Mikroschalter 94. Die Wippe 90 wirkt über ihre beiden Rollen 91 und 92 mit dem Kurbelstift 79 zusammen und wird von diesem jeweils in die eine der beiden gezeigten Endstellungen gekippt. Der Schleifbügel 93 wirkt als Reibungsbremse und hält die Wippe dann in der jeweiligen Endstellung fest. In der einen Endstellung ist der Mikroschalter 94 betätigt (Fig. 14b), in der anderen ist er es nicht (Fig. 14a). Der Zustand des Mikroschalters 94 wird von der zentralen Antriebssteuerung zur Festlegung der erforderlichen Drehrichtung der Kurbelscheibe 78 ausgewertet.

Durch die eben erläuterte, Flip-flop-artige Fixierung des Transporthebels TH an seinen beiden Anschlägen 82 und 86 braucht der Antriebsmotor 80 für die Kurbelscheibe 78 nicht abrupt gestoppt zu werden, wenn der Transporthebel seine jeweilige Endstellung erreicht hat. Es kann daher für den Antriebsmotor 80 ein gewöhnlicher, nach dem Abschalten aufgrund der Massenträgheit noch etwas nachlaufender Elektromotor verwendet werden. Die Abstellung des Motors kann dann ohne besonderen Aufwand z.B. mittels eines geeignet angeordneten Endschalters erfolgen.

## Patentansprüche

1. Vorrichtung zur Herstellung von fotographischen Kopien ab scheibenförmigen Kopiervorlagen, wobei die zu kopierenden Vorlagenscheiben sequentiell aus einem Abgabemagazin entnommen, ausgemessen, kopiert und dann in einem Aufnahmemagazin abgelegt werden, mit einem Abgabemagazin (M) und einem Aufnahmemagazin (M), einer Messstation (A) zum fotographischen Ausmessen der einzelnen Bildstellen auf den Vorlagenscheiben (D), einer Kopierstation (K) zum fotographischen Kopieren der einzelnen Bildstellen auf den Vorlagenscheiben nach Massgabe der in der Messstation (A) ermittelten Messdaten, und Transportmitteln (2, 51-65, TH, DK, STA, STB, HO, NH), um taktweise die Vorlagenscheiben (D) aus dem Abgabemagazin (M) in die Übernahmestelle (UN) eines Transportwegs zu entnehmen, von dort über den Transportweg der Messstation (A) und der Kopierstation (K) zuzuführen und weiter zu einer Übergabestelle (UG) des Transportwegs zu bringen und von dort aus im Aufnahmemagazin (M) zu versorgen, gekennzeichnet durch ein schrittweise drehbares Magazinkarussell (MK) für das Abgabemagazin (M), das Aufnahmemagazin (M) und wenigstens ein weiteres Magazin (M), durch automatische Fortschaltmittel (AST), welche das Magazinkarussell (MK) nach Entnahme der letzten Vorlagenscheibe (D) aus dem Abgabemagazin (M) um einen Schritt, d.h. um einen Magazinabstand, weiterdrehen, durch Nachreichtransportmittel (NH), welche zum Zeitpunkt des Weiterschaltens des Magazinkarussells (MK) noch auf dem Transportweg befindliche Vorlagenscheiben (D) dem inzwischen weiterbewegten Aufnahmemagazin (M) nachtransportiert, und durch zusätzliche Stapelmittel (STB), welche diese nachtransportierten Vorlagenscheiben (D) in das Aufnahmemagazin (M) einbringen.

2. Vorrichtung nach Anspruch 1, dadurch gekennzeichnet, dass die Nachreichtransportmittel einen um die Drehachse des Magazinkarussells (MK) schwenkbaren Transportarm (NH) mit einer Ausnehmung (7) zur Aufnahme einer Vorlagenscheibe (D) umfassen.

3. Vorrichtung nach Anspruch 1, dadurch gekennzeichnet, dass die Nachreichtransportmittel eine um die Drehachse des Magazinkarussells (MK) drehbare Transportscheibe mit im Kreis angeordneten Ausnehmungen zur Aufnahme einer Vorlagenscheibe (D) umfassen, wobei die Anzahl der Ausnehmungen gleich gross ist wie die Anzahl der für eine volle Umdrehung des Magazinkarussells benötigten Transportschritte.

4. Vorrichtung nach einem der Ansprüche 1-3, dadurch gekennzeichnet, dass die Transportmittel eine Verbindungseinrichtung (TH) umfassen, welche die Vorlagenscheiben (D) von einer Übergabestelle (MUG) des Magazinkarussells (MK) in die Übernahmestelle (UN) des Transportwegs der Vorlagenscheiben (D) und von der Übergabestelle (UG) des Transportwegs in eine Übernahmestelle (MUN) des Magazinkarussells (MK) transportieren.

5. Vorrichtung nach Anspruch 4, dadurch gekennzeichnet, dass die Verbindungseinrichtung ein zweiarmiger Transporthebel (TH) ist, der an seinen beiden Enden je eine Ausnehmung (4, 5) zur Aufnahme einer Vorlagenscheibe (D) aufweist.

6. Vorrichtung nach Anspruch 5, dadurch gekennzeichnet, dass der zweiarmige Transporthebel (TH) zwischen zwei Endstellungen hin- und herschwenkbar angetrieben ist, wobei er in der einen Endstellung je eine Vorlagenscheibe aus den Übergabestellen (UG, MUG) des Magazinkarussells und des Transportwegs übernimmt und in der anderen Endstellung diese beiden Scheiben in die Übernahmestellen (UN, MUN) des Transportwegs bzw. des Magazinkarussells abgibt.

7. Vorrichtung nach einem der vorangehenden Ansprüche, dadurch gekennzeichnet, dass eine Handeingabestation (H) vorgesehen ist, in der eine Vorlagenscheibe (D) unter Umgehung der Magazine direkt in den Transportweg eingeführt werden kann.

8. Verfahren zur Herstellung von fotographischen Kopien ab scheibenförmigen Kopiervorlagen, wobei die zu kopierenden, in einem Abgabemagazin enthaltenen Vorlagenscheiben sequentiell aus dem Abgabemagazin entnommen, längs eines Vorlagentransportwegs durch eine Messstation und eine Kopierstation geführt, in denen sie fotoelektrisch ausgemessen und anhand der dabei gewonnenen Abtastwerte kopiert werden, und dann in einem Aufnahmemagazin wieder abgelegt werden, dadurch gekennzeichnet, dass gleichzeitig mehrere Magazine eingesetzt werden und dass diese Magazine hintereinander längs einer Magazintransportbahn durch eine Übergabestelle, an der jeweils die Entnahme wenigstens eines Teils der in ihnen befindlichen Vorlagenscheiben erfolgt, und durch eine Übernahmestelle, an der jeweils die Beladung mit wenigstens einem Teil der bereits kopierten Vorlagenscheiben erfolgt, sowie durch eine Hilfsübergabestelle oder durch eine Hilfsübernahmestelle bewegt werden, an der die Entnahme von bzw. die Beladung mit den restlichen, an der Übergabestelle nicht entnommenen bzw. an der Übernahmestelle nicht geladenen Vorlagenscheiben erfolgt.

9. Verfahren nach Anspruch 8, dadurch gekennzeichnet, dass mindestens vier Magazine gleichzeitig verwendet und vorzugsweise auf einer Kreisbahn geführt werden.

**Claims**

1. Apparatus for the preparation of photographic copies from disk shaped masters, wherein the master disks to be copied are taken sequentially from a delivery magazine, measured, copied and placed in a receiving magazine, with a delivery magazine (M) and a receiving magazine (M), a measuring station (A) for the photographic measuring of individual image locations on the master disks (D), a copying station (K) for the photographic copying of individual image location on the master disks in keeping with the measured data determined in the measuring station (A) and convoyer means (2, 51-65, TH, DK, STA, STB, HO, NH) in order to transfer the master disks (D) in a stepwise manner from the delivery magazine (M) into the transfer station (UN) of a conveyor path, to pass them over the conveyor path to the measuring station (A) and the copying station (K) and to bring them further to a transfer station (UG) of the transport track, and from there to store them in the receiving magazine (M), characterized by a magazine carrousel (MK) with a stepwise rotation for the delivery magazine (M), the receiving magazine (M) and at least one further magazine (M), by automatic stepping means (AST), which rotate the magazine carrousel (MK) following the removal of the last master disk (D) from the delivery magazine (M) by one step, i.e. by one magazine distance, by follower conveying means (NH), which at the time of the stepping of the magazine carrousel (MK) convey the master disks (D) still on the conveyor path after the receiving magazine (M) which in the meantime has moved on, and by additional stacking means (STB) to place the post-transported master disks (D) into the receiving magazine (M).

2. Apparatus according to Claim 1, characterized in that the follower conveying means (MK) comprise a conveyor arm (NH) pivoting around the axis of rotation of the carrousel magazine (MK), with a recess (7) to receive a master disk (D).

3. Apparatus according to Claim 1, characterized in that the follower conveying means comprise a conveyor disk rotating around the axis of rotation of the magazine carrousel (MK), with a plurality of recesses arranged in a circle to receive a master disk (D), with the number of recesses being equal to the number of conveying steps required for a full rotation of the magazine carrousel.

4. Apparatus according to one of Claims 1-3, characterized in that the conveying means comprise a connecting device (TH), whereby the master disks (D) are transported from a transfer station (MUG) of the magazine carrousel (MK) into the receiving station (UN) of the conveyor path of the master disks (D) and from the transfer station (UG) of the conveyor path into a receiving station (MUN) of the magazine carrousel (MK).

5. Apparatus according to Claim 4, characterized in that the connecting device is a dual arm transport lever (TH), comprising at each end a recess (4, 5) to receive a master disk (D).

6. Apparatus according to Claim 5, characterized in that the dual arm transport lever (TH) is driven pivotingly between two terminal positions, whereby in one terminal position one master disk each is taken from the transfer stations (UG, MUG) of the magazine carrousel and the conveyor path, and in the other terminal position the said two disks are transferred to the receiving stations (UN, MUN) of the conveyor path and the magazine carrousel, respectively.

7. Apparatus according to one of the preceding claims, characterized in that a manual insertion station (H) is provided, whereby a master disk (D) may be introduced directly into the conveyor path, while bypassing the magazines.

8. Process for the preparation of photographic copies from disk shaped copy masters, wherein the master disk to be copied and contained in a delivery magazine are taken sequentielly from said delivery magazine, guided along a master conveyor path through a measuring station and a copying station, wherein they are photoelectrically measured and subsequently copied in keeping with the scanning values obtained, and placed into a receiving magazine, characterized in that a plurality of magazines is used simultaneously and that said magazines are moved successively along a magazine conveyor path through a transfer station wherein at least part of the master disk is taken from them, and through a receiving station wherein they are loaded with a least part of the master disks already copied, and through an auxiliary transfer station or an auxiliary receiving station, wherein the remaining master disks not removed in the transfer station and not loaded in the receiving station, are respectively removed and loaded.

9. Process according to Claim 8, characterized in that at least four magazines are used simultaneously, said magazines being guided preferably over a circular path.

**Revendications**

1. Dispositif de production de copies photographiques à partir d'originaux en forme de disques, les originaux à reproduire étant retirés successivement d'un magasin débiteur, analysés, copiés puis déposés dans un magasin récepteur, dispositif comprenant un magasin (M) débiteur et un magasin (M) récepteur, un poste (A) de mesure destiné à analyser photographiquement les diverses vues des disques (D), un poste (K) de copie destiné à reproduire photographiquement les diverses vues des disques originaux, conformément aux valeurs relevées au poste (A) de mesure, et des éléments de transport (2, 51-65, TH, DK, STA, STB, HO, NH) destinés à prélever en synchronisme les disques (D) originaux du magasin (M) débiteur à la position (UN) de réception d'un chemin de transport, à les amener de là, en suivant ce chemin, au poste (A) de mesure et au poste (K) de copie, puis à une position (UG) de transfert dudit chemin et à la délivrer ensuite au magasin (M) récepteur, dispositif caractérisé par un manège (MK) tournant pas à pas et portant le magasin (M) débiteur, le magasin (M) récepteur et au moins un autre magasin (M); par un circuit (AST) automatique d'avancement, qui fait tourner ce manège d'un pas, c'est-à-dire de l'écart entre magasins, lorsque le dernier disque (D) original a été retiré de ce magasin (M) débiteur; par un mécanisme de récupération (NH), ramenant les disques (D) originaux qui se trouvent encore sur le chemin au moment où le manège (MK) avance, au magasin (M) récepteur qui a été indexé entre temps; et par un organe (STB) empileur auxiliaire, qui introduit ces disques (D) récupérés dans ce magasin (M) récepteur.

2. Dispositif selon la revendication 1, caractérisé en ce que le mécanisme de récupération comporte un bras (NH) de transport pivotant sur l'axe de rotation du manège (MK) porte-magasins et présentant une ouverture (7) destinée à loger un disque original (D).

3. Dispositif selon la revendication 1, caractérisé en ce que le mécanisme de récupération comporte un disque transporteur tournant sur l'axe de rotation du manège (MK) porte-magasins et comportant des ouvertures disposées circulairement, destinées à loger chacune un disque (D) original, le nombre de ces ouvertures étant égal à celui des pas nécessaires pour que ce manège exécute un tour complet.

4. Dispositif selon l'une des revendications 1-3, caractérisé en ce que le mécanisme de transport comprend un élément (TH) de liaison, qui transporte les disques (D) originaux, d'une position (MUG) de transfert du manège (MK) porte-magasins à la position (UN) de réception du chemin suivi par ces disques, et de la position (UG) de transfert de ce chemin à une position (MUN) de réception de ce manège (MK).

5. Dispositif selon la revendication 4, caractérisé en ce que l'élement de liaison est un levier (TH) de transport à deux bras, qui comporte à chacune de ses deux extrémités une ouverture (4, 5) destinée à loger un disque (D) original.

6. Dispositif selon la revendication 5, caractérisé en ce que le levier (TH) de transport à deux bras pivote entre deux positions extrêmes, en prélevant dans l'une d'elles un disque original à chacune des positions (UG, MUG) de transfert du manège et du chemin de transport, respectivement et en délivrant dans son autre position ces deux disques aux positions (UN, MUN) de réception de ce chemin de transport et de ce manège, respectivement.

7. Dispositif selon l'une des revendications précédentes, caractérisé en ce qu'il comprend un poste (H) d'insertion manuelle, où il est possible d'introduire un disque (D) directement sur le chemin de transport sans passer par les magasins.

8. Procédé de production de copies photographiques à partir d'originaux en forme de disques, dans lequel les originaux à reproduire, contenus dans un magasin débiteur, en sont prélevés successivement, amenés en suivant un chemin de transport à un poste de mesure et à un poste de copie, dans lesquels ils sont analysés par voie photoélectrique et reproduits conformément aux valeurs d'analyse obtenues, puis redéposés dans un magasin récepteur, procédé caractérisé en ce que plusieurs magasins sont utilisés en même temps et en ce que ces magasins sont amenés les uns après les autres, en suivant un chemin de transport, à une position de transfert où une partie au moins des disques que chaque magasin contient est retirée, et à une position de réception, où une partie au moins des disques reproduits est chargée, ainsi qu'à une position auxiliaire de transfert ou une position auxiliaire de réception, où a lieu le retrait ou le chargement, respectivement, des disques restants, qui n'ont pas été retirés à la position de transfert, ou bien chargés à la position de réception.

9. Procédé selon la revendication 8, caractérisé en ce que quatre magasins au moins sont utilisés simultanément et sont transportés avantageusement le long d'un chemin circulaire.

Fig. 1

Fig. 2

**Fig. 3**

# Fig. 4

Fig. 5a

Fig. 5b

Fig. 6a

Fig. 6b

Fig. 7a

Fig. 7b

## Fig. 8a

## Fig. 8c

## Fig. 8b

0 120 809

0 120 809

Fig. 10a

Fig. 11a

0 120 809

Fig. 10b

Fig. 11b

0 120 809

# Fig. 12

*Fig. 13*

*Fig. 14·a*

37

0 120 809

Fig. 14b

**Fig. 15/1**

**Fig. 15/2**

43

65

51

2

M

D

55

58

MK

B

72 TH 73 B

NH
TH

79

75

78

G G

80

60

43

0 120 809

*Fig. 15/1*

*Fig. 15/2*